# EUROPEAN PATENT APPLICATION

(11) **EP 4 597 279 A1**
(43) Date of publication of application: **06.08.2025**
(21) Application number: 25150841.2
(22) Date of filing: 09.01.2025
(51) Int. Cl.: G06F 3/048, G06F 3/0481, G06F 3/04842, G06F 3/01

(54) **CURSOR BEHAVIOR**

(30) Priority: 01.02.2024 US 202463548745 P; 30.05.2024 US 202418678955
(71) Applicant: Apple Inc., Cupertino, CA 95014 (US)
(72) Inventor: EBBOLE, Mark A., Cupertino, CA, 95014 (US); WING, Alexander T., Cupertino, CA, 95014 (US); BRAY, Cedric, Cupertino, CA, 95014 (US); KRIVORUCHKO, Evgenii, Cupertino, CA, 95014 (US); PAKOSZ, Gregory, Cupertino, CA, 95014 (US); LAWRENCE, Jack H., Cupertino, CA, 95014 (US); LAM, Wai Ching, Cupertino, CA, 95014 (US)
(74) Representative: Lang, Johannes

(57) **Abstract**

The present disclosure generally relates to managing the behavior of a cursor.

## Description

### CROSS-REFERENCE TO RELATED APPLICATIONS

The present application claims priority to U.S Provisional Patent Application Serial No. 63/548,745, entitled "CURSOR BEHAVIOR" filed February 1, 2024, which is hereby incorporated by reference in its entirety for all purposes.

### BACKGROUND

Computer systems are becoming increasingly complex. For example, computer systems can execute many different applications at the same time while providing a consistent interface with each, including a cursor that allows focus and/or selection of user interface elements of an application. Managing the cursor in this complex environment can be difficult. Accordingly, there is a need to improve techniques for managing the behavior of a cursor.

### SUMMARY

Current techniques for managing the behavior of a cursor are generally ineffective and/or inefficient. For example, some techniques do not allow the behavior of a cursor to be selectively configured on a surface-by-surface basis. This disclosure provides more effective and/or efficient techniques for managing the behavior of a cursor using an example of a virtual reality environment. It should be recognized that user interface elements other than a cursor and/or environments other than a virtual reality environment can be used with techniques described herein. In addition, techniques optionally complement or replace other techniques for managing the behavior of a cursor.

In some embodiments, a method that is performed at a first application executing on a computer system is described. In some embodiments, the method comprises: receiving, from a second application different from the first application, a first request to use a respective cursor behavior; and in conjunction with receiving the first request to use the respective cursor behavior: in accordance with a determination that the respective cursor behavior is first cursor behavior, causing a cursor to operate in a first manner; and in accordance with a determination that the respective cursor behavior is second cursor behavior different from the first cursor behavior, causing the cursor to not be used.

In some embodiments, a non-transitory computer-readable storage medium storing one or more programs configured to be executed by one or more processors of a computer system is described. In some embodiments, the one or more programs corresponds to a first application executing on the computer system and includes instructions for: receiving, from a second application different from the first application, a first request to use a respective cursor behavior; and in conjunction with receiving the first request to use the respective cursor behavior: in accordance with a determination that the respective cursor behavior is first cursor behavior, causing a cursor to operate in a first manner; and in accordance with a determination that the respective cursor behavior is second cursor behavior different from the first cursor behavior, causing the cursor to not be used.

In some embodiments, a transitory computer-readable storage medium storing one or more programs configured to be executed by one or more processors of a computer system is described. In some embodiments, the one or more programs corresponds to a first application executing on the computer system and includes instructions for: receiving, from a second application different from the first application, a first request to use a respective cursor behavior; and in conjunction with receiving the first request to use the respective cursor behavior: in accordance with a determination that the respective cursor behavior is first cursor behavior, causing a cursor to operate in a first manner; and in accordance with a determination that the respective cursor behavior is second cursor behavior different from the first cursor behavior, causing the cursor to not be used.

In some embodiments, a first application executing on a computer system is described. In some embodiments, the computer system comprises one or more processors and memory storing one or more programs configured to be executed by the one or more processors. In some embodiments, the one or more programs includes instructions for: receiving, from a second application different from the first application, a first request to use a respective cursor behavior; and in conjunction with receiving the first request to use the respective cursor behavior: in accordance with a determination that the respective cursor behavior is first cursor behavior, causing a cursor to operate in a first manner; and in accordance with a determination that the respective cursor behavior is second cursor behavior different from the first cursor behavior, causing the cursor to not be used.

In some embodiments, a first application executing on a computer system is described. In some embodiments, the computer system comprises means for performing each of the following steps: receiving, from a second application different from the first application, a first request to use a respective cursor behavior; and in conjunction with receiving the first request to use the respective cursor behavior: in accordance with a determination that the respective cursor behavior is first cursor behavior, causing a cursor to operate in a first manner; and in accordance with a determination that the respective cursor behavior is second cursor behavior different from the first cursor behavior, causing the cursor to not be used.

In some embodiments, a computer program product is described. In some embodiments, the computer program product comprises one or more programs configured to be executed by one or more processors of a computer system. In some embodiments, the one or more programs corresponds to a first application executing on the computer system and include instructions for: receiving, from a second application different from the first application, a first request to use a respective cursor behavior; and in conjunction with receiving the first request to use the respective cursor behavior: in accordance with a determination that the respective cursor behavior is first cursor behavior, causing a cursor to operate in a first manner; and in accordance with a determination that the respective cursor behavior is second cursor behavior different from the first cursor behavior, causing the cursor to not be used.

In some embodiments, a method that is performed at a first application executing on a computer system is described. In some embodiments, the method comprises: identifying a user interface to be displayed by the computer system; after identifying the user interface to be displayed by the computer system, sending, to a second application, a definition of the user interface, wherein the definition includes: a definition of a first surface that causes a cursor to behave in a first manner with respect to the first surface; and a definition of a second surface, different from the first surface, that causes the cursor to behave in a second manner, different from the first manner, with respect to the second surface; and after sending the definition of the user interface, receiving an indication of a user input corresponding to the first surface; and in response to receiving the indication of the user input corresponding to the first surface, performing an operation in accordance with the user input.

In some embodiments, a non-transitory computer-readable storage medium storing one or more programs configured to be executed by one or more processors of a computer system is described. In some embodiments, the one or more programs corresponds to a first application executing on the computer system and includes instructions for: identifying a user interface to be displayed by the computer system; after identifying the user interface to be displayed by the computer system, sending, to a second application, a definition of the user interface, wherein the definition includes: a definition of a first surface that causes a cursor to behave in a first manner with respect to the first surface; and a definition of a second surface, different from the first surface, that causes the cursor to behave in a second manner, different from the first manner, with respect to the second surface; and after sending the definition of the user interface, receiving an indication of a user input corresponding to the first surface; and in response to receiving the indication of the user input corresponding to the first surface, performing an operation in accordance with the user input.

In some embodiments, a transitory computer-readable storage medium storing one or more programs configured to be executed by one or more processors of a computer system is described. In some embodiments, the one or more programs corresponds to a first application executing on the computer system and includes instructions for: identifying a user interface to be displayed by the computer system; after identifying the user interface to be displayed by the computer system, sending, to a second application, a definition of the user interface, wherein the definition includes: a definition of a first surface that causes a cursor to behave in a first manner with respect to the first surface; and a definition of a second surface, different from the first surface, that causes the cursor to behave in a second manner, different from the first manner, with respect to the second surface; and after sending the definition of the user interface, receiving an indication of a user input corresponding to the first surface; and in response to receiving the indication of the user input corresponding to the first surface, performing an operation in accordance with the user input.

In some embodiments, a first application executing on a computer system is described. In some embodiments, the computer system comprises one or more processors and memory storing one or more programs configured to be executed by the one or more processors. In some embodiments, the one or more programs corresponds to a first application executing on the computer system and includes instructions for: identifying a user interface to be displayed by the computer system; after identifying the user interface to be displayed by the computer system, sending, to a second application, a definition of the user interface, wherein the definition includes: a definition of a first surface that causes a cursor to behave in a first manner with respect to the first surface; and a definition of a second surface, different from the first surface, that causes the cursor to behave in a second manner, different from the first manner, with respect to the second surface; and after sending the definition of the user interface, receiving an indication of a user input corresponding to the first surface; and in response to receiving the indication of the user input corresponding to the first surface, performing an operation in accordance with the user input.

In some embodiments, a first application executing on a computer system is described. In some embodiments, the computer system corresponds to a first application executing on the computer system and comprises means for performing each of the following steps: identifying a user interface to be displayed by the computer system; after identifying the user interface to be displayed by the computer system, sending, to a second application, a definition of the user interface, wherein the definition includes: a definition of a first surface that causes a cursor to behave in a first manner with respect to the first surface; and a definition of a second surface, different from the first surface, that causes the cursor to behave in a second manner, different from the first manner, with respect to the second surface; and after sending the definition of the user interface, receiving an indication of a user input corresponding to the first surface; and in response to receiving the indication of the user input corresponding to the first surface, performing an operation in accordance with the user input.

In some embodiments, a computer program product is described. In some embodiments, the computer program product comprises one or more programs configured to be executed by one or more processors of a computer system. In some embodiments, the one or more programs corresponds to a first application executing on the computer system and includes instructions for: identifying a user interface to be displayed by the computer system; after identifying the user interface to be displayed by the computer system, sending, to a second application, a definition of the user interface, wherein the definition includes: a definition of a first surface that causes a cursor to behave in a first manner with respect to the first surface; and a definition of a second surface, different from the first surface, that causes the cursor to behave in a second manner, different from the first manner, with respect to the second surface; and after sending the definition of the user interface, receiving an indication of a user input corresponding to the first surface; and in response to receiving the indication of the user input corresponding to the first surface, performing an operation in accordance with the user input.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

### DESCRIPTION OF THE FIGURES

For a better understanding of the various described embodiments, reference should be made to the Detailed Description below, in conjunction with the following drawings in which like reference numerals refer to corresponding parts throughout the figures.
FIG. 1 illustrates an example system architecture including various electronic devices that may implement the subject system in accordance with some embodiments.
FIG. 2 illustrates a block diagram of example features of an electronic device in accordance with some embodiments.
FIG. 3 illustrates a diagram of a computer system in accordance with some embodiments.
FIG. 4 illustrates a diagram of communication between a cursor process and a user process in accordance with some embodiments.
FIGS. 5A-5F illustrate exemplary user interfaces for managing the behavior of a cursor in accordance with some embodiments.
FIG. 6 is a flow diagram illustrating a method for managing the behavior of a cursor in accordance with some embodiments.
FIG. 7 is a flow diagram illustrating a method for changing the behavior of a cursor in accordance with some embodiments.
FIG. 8 illustrates an electronic system with which one or more implementations of the subject technology may be implemented.

### DETAILED DESCRIPTION

The following description sets forth exemplary methods, parameters, and the like. It should be recognized, however, that such description is not intended as a limitation on the scope of the present disclosure but is instead provided as a description of exemplary embodiments.

Methods described herein can include one or more steps that are contingent upon one or more conditions being satisfied. It should be understood that a method can occur over multiple iterations of the same process with different steps of the method being satisfied in different iterations. For example, if a method requires performing a first step upon a determination that a set of one or more criteria is met and a second step upon a determination that the set of one or more criteria is not met, a person of ordinary skill in the art would appreciate that the steps of the method are repeated until both conditions, in no particular order, are satisfied. Thus, a method described with steps that are contingent upon a condition being satisfied can be rewritten as a method that is repeated until each of the conditions described in the method are satisfied. This, however, is not required of system or computer readable medium claims where the system or computer readable medium claims include instructions for performing one or more steps that are contingent upon one or more conditions being satisfied. Because the instructions for the system or computer readable medium claims are stored in one or more processors and/or at one or more memory locations, the system or computer readable medium claims include logic that can determine whether the one or more conditions have been satisfied without explicitly repeating steps of a method until all of the conditions upon which steps in the method are contingent have been satisfied. A person having ordinary skill in the art would also understand that, similar to a method with contingent steps, a system or computer readable storage medium can repeat the steps of a method as many times as needed to ensure that all of the contingent steps have been performed.

Although the following description uses terms "first," "second," etc. to describe various elements, these elements should not be limited by the terms. In some examples, these terms are used to distinguish one element from another. For example, a first subsystem could be termed a second subsystem, and, similarly, a second subsystem device or a subsystem device could be termed a first subsystem device, without departing from the scope of the various described embodiments. In some examples, the first subsystem and the second subsystem are two separate references to the same subsystem. In some examples, the first subsystem and the second subsystem are both subsystems, but they are not the same subsystem or the same type of subsystem.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' is, optionally, construed to mean "when," "upon," "in response to determining," "in response to detecting," or "in accordance with a determination that" depending on the context. Similarly, the phrase "if it is determined" or "if [a stated condition or event] is detected" is, optionally, construed to mean "upon determining," "in response to determining," "upon detecting [the stated condition or event]," "in response to detecting [the stated condition or event]," or "in accordance with a determination that [the stated condition or event]" depending on the context.

A physical environment refers to a physical world that people can sense and/or interact with without aid of electronic devices. The physical environment may include physical features such as a physical surface or a physical object. For example, the physical environment corresponds to a physical park that includes physical trees, physical buildings, and physical people. People can directly sense and/or interact with the physical environment such as through sight, touch, hearing, taste, and smell. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics. As one example, the XR system may detect head movement and, in response, adjust graphical content and an acoustic field presented to the person in a manner similar to how such views and sounds would change in a physical environment. As another example, the XR system may detect movement of the electronic device presenting the XR environment (e.g., a mobile phone, a tablet, a laptop, or the like) and, in response, adjust graphical content and an acoustic field presented to the person in a manner similar to how such views and sounds would change in a physical environment. In some situations (e.g., for accessibility reasons), the XR system may adjust characteristic(s) of graphical content in the XR environment in response to representations of physical motions (e.g., vocal commands).

There are many different types of electronic systems that enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head mountable system may have one or more speaker(s) and an integrated opaque display. Alternatively, a head mountable system may be configured to accept an external opaque display (e.g., a smartphone). The head mountable system may incorporate one or more imaging sensors to capture images or video of the physical environment, and/or one or more microphones to capture audio of the physical environment. Rather than an opaque display, a head mountable system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In some implementations, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

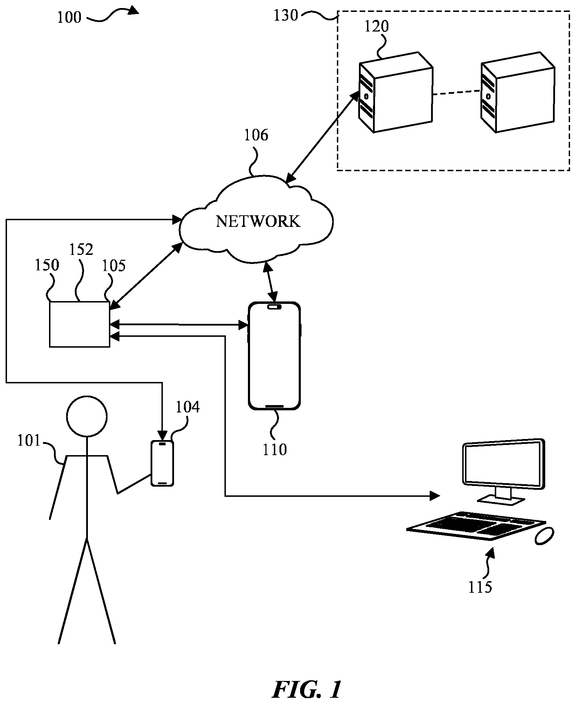

FIG. 1 illustrates an example system architecture (e.g., system architecture100) including various electronic devices that may implement the subject system in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

System architecture 100 includes electronic device 105, handheld electronic device 104, electronic device 110, electronic device 115, and server 120. For explanatory purposes, system architecture 100 is illustrated in FIG. 1 as including electronic device 105, handheld electronic device 104, electronic device 110, electronic device 115, and server 120; however, system architecture 100 may include any number of electronic devices, and any number of servers or a data center including multiple servers.

Electronic device 105 may be implemented, for example, as a tablet device, a smartphone, or as a head mountable portable system (e.g., worn by user 101). Electronic device 105 includes a display system capable of presenting a visualization of an extended reality environment to the user. Electronic device 105 may be powered with a battery and/or another power supply. In an example, the display system of electronic device 105 provides a stereoscopic presentation of the extended reality environment, enabling a three-dimensional visual display of a rendering of a particular scene, to the user. In one or more implementations, instead of, or in addition to, utilizing electronic device 105 to access an extended reality environment, the user may use handheld electronic device 104, such as a tablet, watch, mobile device, and the like.

Electronic device 105 may include one or more cameras such as camera(s) 150 (e.g., visible light cameras, infrared cameras, etc.) For example, electronic device 105 may include multiple cameras 150. For example, multiple cameras 150 may include a left facing camera, a front facing camera, a right facing camera, a down facing camera, a left-down facing camera, a right-down facing camera, an up facing camera, one or more eye-facing cameras, and/or other cameras. Each of cameras 150 may include one or more image sensors (e.g., charged coupled device (CCD) image sensors, complementary metal oxide semiconductor (CMOS) image sensors, or the like).

Further, electronic device 105 may include various sensors 152 including, but not limited to, other cameras, other image sensors, touch sensors, microphones, inertial measurement units (IMU), heart rate sensors, temperature sensors, depth sensors (e.g., Lidar sensors, radar sensors, sonar sensors, time-of-flight sensors, etc.), GPS sensors, Wi-Fi sensors, near-field communications sensors, radio frequency sensors, etc. Moreover, electronic device 105 may include hardware elements that can receive user input such as hardware buttons or switches. User inputs detected by such cameras, sensors, and/or hardware elements may correspond to, for example, various input modalities. For example, such input modalities may include, but are not limited to, facial tracking, eye tracking (e.g., gaze direction), hand tracking, gesture tracking, biometric readings (e.g., heart rate, pulse, pupil dilation, breath, temperature, electroencephalogram, olfactory), recognizing speech or audio (e.g., particular hotwords), and activating buttons or switches, etc. In one or more implementations, facial tracking, gaze tracking, hand tracking, gesture tracking, object tracking, and/or physical environment mapping processes (e.g., system processes and/or application processes) may utilize images (e.g., image frames) captured by one or more image sensors of cameras 150 and/or sensors 152.

In one or more implementations, electronic device 105 may be communicatively coupled to a base device such as electronic device 110 and/or electronic device 115. Such a base device may, in general, include more computing resources and/or available power in comparison with electronic device 105. In an example, electronic device 105 may operate in various modes. For instance, electronic device 105 can operate in a standalone mode independent of any base device. When electronic device 105 operates in the standalone mode, the number of input modalities may be constrained by power and/or processing limitations of electronic device 105 such as available battery power of the device. In response to power limitations, electronic device 105 may deactivate certain sensors within the device itself to preserve battery power and/or to free processing resources.

Electronic device 105 may also operate in a wireless tethered mode (e.g., connected via a wireless connection with a base device), working in conjunction with a given base device. Electronic device 105 may also work in a connected mode where electronic device 105 is physically connected to a base device (e.g., via a cable or some other physical connector) and may utilize power resources provided by the base device (e.g., where the base device is charging electronic device 105 and/or providing power to electronic device 105 while physically connected).

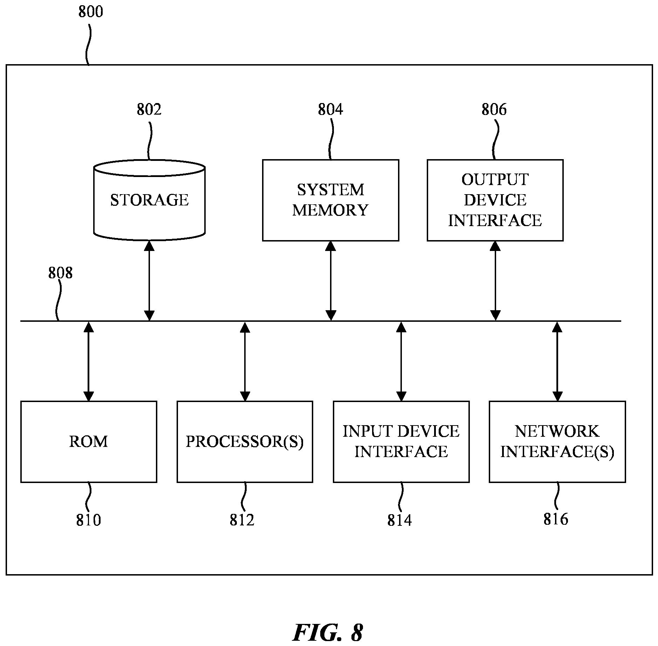

When electronic device 105 operates in the wireless tethered mode or the connected mode, a least a portion of processing user inputs and/or rendering the extended reality environment may be offloaded to the base device thereby reducing processing burdens on electronic device 105. For instance, in an implementation, electronic device 105 works in conjunction with electronic device 110 or electronic device 115 to generate an extended reality environment including physical and/or virtual objects that enables different forms of interaction (e.g., visual, auditory, and/or physical or tactile interaction) between the user and the generated extended reality environment in a real-time manner. In an example, electronic device 105 provides a rendering of a scene corresponding to the extended reality environment that can be perceived by the user and interacted with in a real-time manner, such as a host environment for a group session with another user. Additionally, as part of presenting the rendered scene, electronic device 105 may provide sound, and/or haptic or tactile feedback to the user. The content of a given rendered scene may be dependent on available processing capability, network availability and capacity, available battery power, and current system workload. Electronic device 105 may be, and/or may include all or part of, the electronic system discussed below with respect to FIG. 8.

Network 106 may communicatively (directly or indirectly) couple, for example, electronic device 105, electronic device 110, and/or electronic device 115 with each other device and/or server 120. In one or more implementations, network 106 may be an interconnected network of devices that may include, or may be communicatively coupled to, the Internet.

Handheld electronic device 104 may be, for example, a smartphone, a portable computing device such as a laptop computer, a companion device (e.g., a digital camera, headphones), a tablet device, a wearable device such as a watch, a band, and the like, or any other appropriate device that includes, for example, one or more speakers, communications circuitry, processing circuitry, memory, a touchscreen, and/or a touchpad. In one or more implementations, handheld electronic device 104 may not include a touchscreen but may support touchscreen-like gestures, such as in an extended reality environment. In one or more implementations, handheld electronic device 104 may include a touchpad. In FIG. 1, by way of example, handheld electronic device 104 is depicted as a tablet device.

Electronic device 110 may be, for example, a smartphone, a portable computing device such as a laptop computer, a companion device (e.g., a digital camera, headphones), a tablet device, a wearable device such as a watch, a band, and the like, or any other appropriate device that includes, for example, one or more speakers, communications circuitry, processing circuitry, memory, a touchscreen, and/or a touchpad. In one or more implementations, electronic device 110 may not include a touchscreen but may support touchscreen-like gestures, such as in an extended reality environment. In one or more implementations, electronic device 110 may include a touchpad. In FIG. 1, by way of example, electronic device 110 is depicted as a tablet device. In one or more implementations, electronic device 110, handheld electronic device 104, and/or electronic device 105 may be, and/or may include all or part of, the electronic system discussed below with respect to FIG. 8. In one or more implementations, electronic device 110 may be another device such as an Internet Protocol (IP) camera, a tablet, or a companion device such as an electronic stylus, etc.

Electronic device 115 may be, for example, desktop computer, a portable computing device such as a laptop computer, a smartphone, a companion device (e.g., a digital camera, headphones), a tablet device, a wearable device such as a watch, a band, and the like. In FIG. 1, by way of example, electronic device 115 is depicted as a desktop computer having one or more cameras 150 (e.g., multiple cameras 150). Electronic device 115 may be, and/or may include all or part of, the electronic system discussed below with respect to FIG. 8.

Server 120 may form all or part of a network of computers or group of servers 130, such as in a cloud computing or data center implementation. For example, server 120 stores data and software, and includes specific hardware (e.g., processors, graphics processors and other specialized or custom processors) for rendering and generating content such as graphics, images, video, audio and multi-media files for extended reality environments. In an implementation, server 120 may function as a cloud storage server that stores any of the aforementioned extended reality content generated by the above-discussed devices and/or server 120.

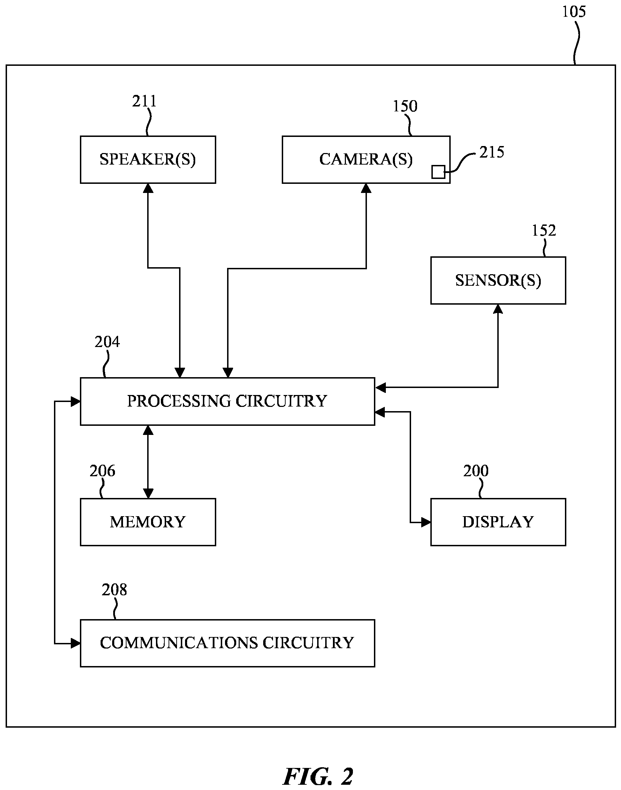

FIG. 2 illustrates a block diagram of various components that may be included in electronic device 105, in accordance with aspects of the disclosure. As shown in FIG. 2, electronic device 105 may include one or more cameras such as camera(s) 150 (e.g., multiple cameras 150, each including one or more image sensors 215) that capture images and/or video of the physical environment around the electronic device, one or more sensors 152 that obtain environment information (e.g., depth information) associated with the physical environment around electronic device 105. Sensors 152 may include depth sensors (e.g., time-of-flight sensors, infrared sensors, radar, sonar, lidar, etc.), one or more microphones, and/or other types of sensors for sensing the physical environment. For example, one or more microphones included in sensor(s) 152 may be operable to capture audio input from a user of electronic device 105, such as a voice input corresponding to the user speaking into the microphones. In the example of FIG. 2, electronic device 105 also includes communications circuitry 208 for communication with electronic device 110, electronic device 115, servers 120, and/or other devices and/or systems in some implementations. Communications circuitry 208 may include radio frequency (RF) communications circuitry for detecting radio frequency identification (RFID) tags, Bluetooth Low Energy (BLE) communications circuitry, other near-field communications (NFC) circuitry, WiFi communications circuitry, cellular communications circuitry, and/or other wired and/or wireless communications circuitry.

As shown, electronic device 105 includes processing circuitry 204 (e.g., one or more processors and/or integrated circuits) and memory 206. Memory 206 may store (e.g., temporarily or permanently) content generated by and/or otherwise obtained by electronic device 105. In some operational scenarios, memory 206 may temporarily store images of a physical environment captured by camera(s) 150, depth information corresponding to the images generated, for example, using a depth sensor of sensors 152, meshes and/or textures corresponding to the physical environment, virtual objects such as virtual objects generated by processing circuitry 204 to include virtual content, and/or virtual depth information for the virtual objects. Memory 206 may store (e.g., temporarily or permanently) intermediate images and/or information generated by processing circuitry 204 for combining the image(s) of the physical environment and the virtual objects and/or virtual image(s) to form, e.g., composite images for display by display 200, such as by compositing one or more virtual objects onto a pass-through video stream obtained from one or more of cameras 150.

As shown, electronic device 105 may include one or more speakers 211. The speakers may be operable to output audio content, including audio content stored and/or generated at electronic device 105, and/or audio content received from a remote device or server via communications circuitry 208.

Memory 206 may store instructions or code for execution by processing circuitry 204, such as, for example operating system code corresponding to an operating system installed on electronic device 105, and application code corresponding to one or more applications installed on the electronic device 105. The operating system code and/or the application code, when executed, may correspond to one or more operating system level processes and/or application level processes, such as processes that support capture of images, obtaining and/or processing environmental condition information, and/or determination of inputs to electronic device 105 and/or outputs (e.g., display content on display 200) from electronic device 105.

Attention is now directed towards techniques for managing the behavior of a cursor. Such techniques are described in the context of a user process communicating with a cursor process. It should be recognized that the behavior of other types of user interface elements can be managed with techniques described herein. For example, the behavior of a window can be managed using techniques described herein. In addition, techniques optionally complement or replace other techniques for managing the behavior of a cursor.

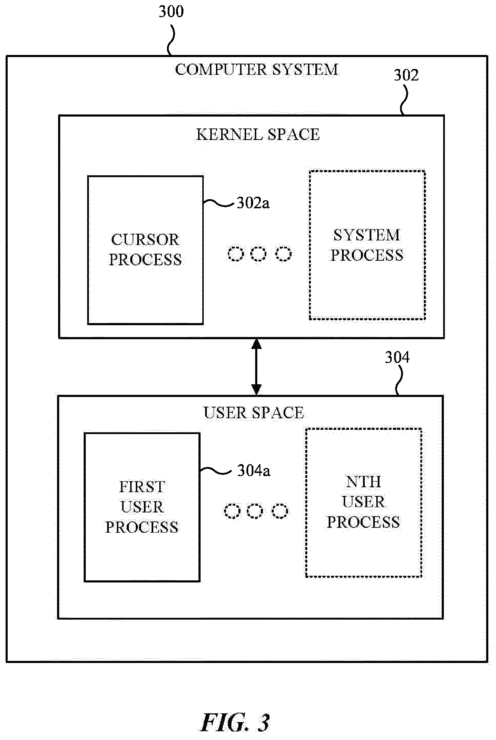

FIG. 3 is a diagram of computer system 300 in accordance with some embodiments. Computer system 300 includes two distinct spaces (e.g., memory spaces) that have processes executing within. The first space is kernel space 302 and the second space is user space 304. Kernel space 302 corresponds to an operating system of computer system 300 and is where system applications of the operating system run. User space 304 is outside of the operating system and is where user applications run.

As illustrated in FIG. 3, each of kernel space 302 and user space 304 has one or more processes executing within. In some embodiments, a process is a specific instance of a running program (e.g., a particular executable and/or program file) on computer system 300. Examples of processes in kernel space 302 include a display process, a cursor process, a scheduling process, a resource allocation process, a device management process, an interrupt handling process, and/or a memory management process. Examples of processes in user space 304 include a word processer process, a calendar processes, and/or an internet browser process. In some embodiments, processes in user space 304 are initiated by a user of computer system 300. For example, computer system 300 can detect a set of one or more user inputs from the user to initiate an application within a process in user space 304.

As illustrated in FIG. 3, cursor process 302a is executing within kernel space 302 and first user process 304a is executing within user space 304. In some embodiments, cursor process 302a manages a virtual cursor. For example, cursor process 302a can cause the virtual cursor to be displayed or ceased to be displayed in response to detecting user inputs, cause the virtual cursor to be moved in response to detecting user inputs, communicate operations (e.g., select, zoom, and/or rotate) occurring with respect to the virtual cursor to one or more applications and/or processes, affect an appearance (e.g., a size, color, shape, and/or orientation) of the virtual cursor, track a position of the virtual cursor, and/or otherwise perform operations corresponding to, associated with, and/or with respect to the virtual cursor. In some embodiments, computer system 300 only allows for a single virtual cursor to be used at a time. It should be recognized that when a cursor process is referred to herein as performing an operation, one or more other system processes (e.g., a display process) can be acting on behalf of and/or in concert with the cursor process to perform the operation.

In some embodiments, communication between kernel space 302 and user space 304 occurs via an application programming interface (API). For example, if an application in user space 304 wants to display content, the application can send a message to a process in kernel space 302 via an API.

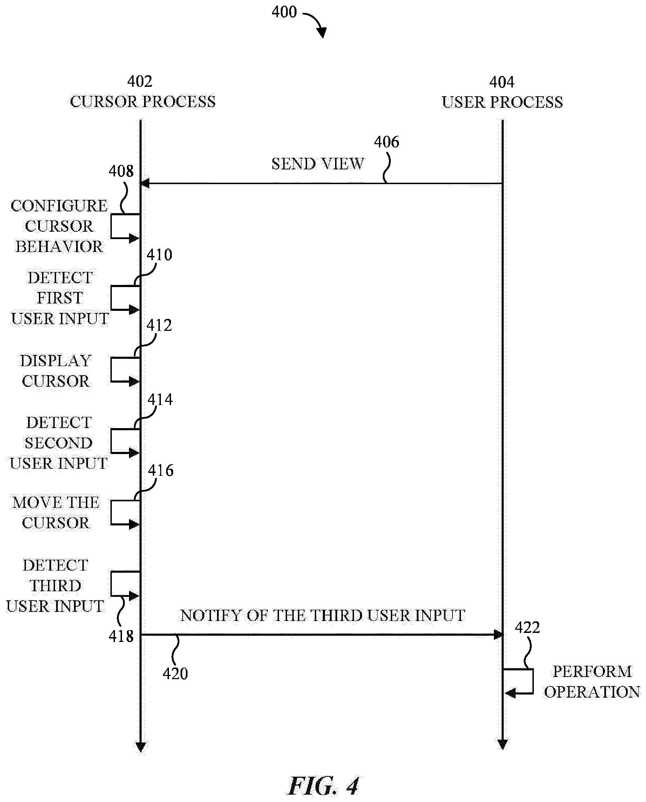

FIG. 4 illustrates swim lane diagram 400 in accordance with some embodiments. Swim lane diagram 400 includes cursor process 402 and user process 404. In some embodiments, cursor process 402 includes one or more features of cursor process 302a and user process 404 includes one or more features of first user process 304a. In some embodiments, cursor process 402 and user process 404 are executing on a computer system (e.g., computer system 300).

At step 406, user process 404 sends a view of a user interface to cursor process 402 (e.g., via an API). In some embodiments, the view is a declarative definition of a structure of the application, including a structure of one or more user interfaces and/or one or more user interface elements to be displayed and/or managed by the operating system of the computer system. While discussed as being sent to cursor process 402, it should be recognized that the view can be sent to another process of the operating system that provides at least a portion of information from the view to cursor process 402 to manage a virtual cursor with respect to the application, the one or more user interfaces, and/or the one or more user interface elements.

An example of a view is shown below:

```
@main
 struct MyApp: App {
 var body: some Scene {
 Window("FirstSurface", id: "first") {
 FirstContent()
 }.cursorbehavior(.enabled)
 Window("SecondSurface", id: "second") {
 SecondContentU
 }.cursorbehavior(.disabled)
  Window("ThirdSurface", id: "third") {
 ThirdContent()
 }.cursorbehavior(.inherit)
 }.cursorbehavior(.enabled)
 }
```

In the view above, the application is referred to as MyApp with a scene (e.g., a region of an environment, such as physical or a virtual environment) that includes multiple different and/or separate surfaces (e.g., FirstSurface, SecondSurface, and ThirdSurface). As provided above, the scene is configured such that the virtual cursor is displayed when interacting with MyApp and/or a user interface of MyApp (e.g., cursorbehavior(.enabled)) as long as a user interface element being interacted with does not override the defined cursorbehavior for the scene (e.g., a request from user process 404 for cursor process 402 to use a virtual cursor with respect to MyApp and/or a user interface of MyApp). As also provided above, FirstSurface is configured such that the virtual cursor is displayed similar to as described above, SecondSurface is configured such that the virtual cursor is not displayed when interacting with SecondSurface, and ThirdSurface is configured such that the virtual cursor inherits behavior of a parent node (e.g., in this case, the cursor behavior for the scene). Accordingly, the view above illustrates that the view of the application can includes multiple different user interface elements that each are configured with different cursor behavior that is either explicitly defined or inherited by a parent node. It should be recognized that multiple scenes and/or multiple applications can be executing and/or causing display of user interface elements at the same time such that each application and/or user interface of each application are controlled by different views provided by each application. It should also be recognized that, while the example above only includes three ways to control cursor behavior (e.g., enabled, disabled, and inherit), more, less, and/or different options can be provided by cursor process 402 such that other applications can further configure the behavior of a virtual cursor.

At step 408, after receiving the view (e.g., or in response to receiving the view) from user process 404, cursor process 402 configures cursor behavior when displaying user interfaces and/or user interface elements corresponding to the view. For example, cursor process 402 can enable or disable display of the cursor. For another example, cursor process 402 can manage an appearance, sensitivity, area of selection and/or speed of the cursor with respect to user interfaces and/or user interface elements corresponding to the view.

At step 410, after configuring the cursor behavior and while one or more user interface elements of the view are being displayed, user process 402 (and/or a computer system executing user process 402) detects a first user input. As explained in greater detail below, the first user input can be a gaze of the user, a hand gesture of the user, a hand movement of the user, a depression of a button of computer system 300, and/or a rotation of a rotatable input mechanism of computer system 300 in the direction of, directed to, and/or corresponding to a user interface element corresponding to the view.

At step 412, based on a determination that the first user input is detected (e.g., or in response to the first user input being detected), cursor process 402 causes the cursor to behave based on the designated cursor behavior (e.g., the cursor behavior that was designated by cursor process 402 at step 408). For example, cursor process 402 can cause the cursor to have a particular appearance, move at a particular speed, and/or have a particular area of selection.

At step 414, after (e.g., or while) the cursor is displayed, cursor process 402 detects a second user input. Similar to above, the second user input can be a gaze of the user, a hand gesture of the user, a hand movement of the user, a depression of a button of computer system 300, and/or a rotation of a rotatable input mechanism of computer system 300 in the direction of, directed to, and/or corresponding to a user interface element corresponding to the view.

At step 416, based on a determination that the second user input is detected (e.g., or in response to the second input being detected), cursor process 402 causes the cursor to move. The cursor moves based on one or more characteristics of the second input. For example, if the second input is detected at a first speed, the cursor moves at a speed that corresponds to the first speed or if the second input is detected in a first direction (e.g., upwards, downwards, and/or sidewards) the cursor moves in the first direction.

At step 418, after cursor process 402 causes the cursor to move, cursor process 402 detects a third user input. Similar to above, the third user input can be a gaze of the user, a hand gesture of the user, a hand movement of the user, a depression of a button of computer system 300, and/or a rotation of a rotatable input mechanism of computer system 300 in the direction of, directed to, and/or corresponding to a user interface element corresponding to the view.

At step 420, after (e.g., in response to) the third user input being detected, cursor process 402 notifies user process 404 that the third user input was detected. At step 422, after receiving the notification that the third user input was detected (e.g., or in response to receiving the notification that the third user input was detected), user process 404 performs an operation in accordance with the third user input. For example, user process 404 can respond to selection of a user interface element, navigate an internet browser, and/or initiate playback of media.

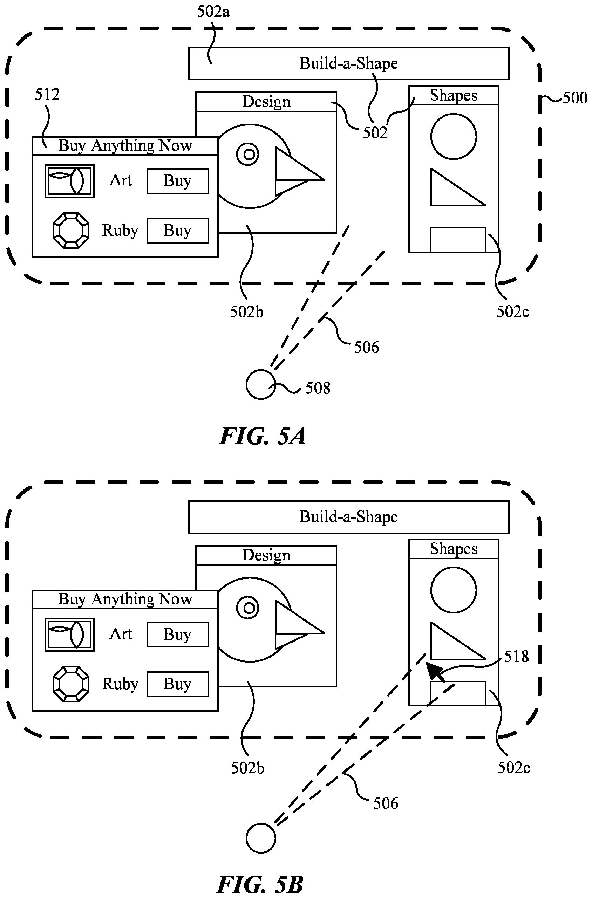

FIG. 5A illustrates virtual environment 500 in accordance with some embodiments. Virtual environment 500 is displayed (e.g., generated and/or projected) by a computer system. In some embodiments, the computer system is a head-mounted display device (e.g., a virtual reality device, an augmented realty device, or a mixed reality device). In some embodiments, the computer system is a smartphone, tablet, fitness tracking device, desktop computer, smartwatch, and/or laptop. In some embodiments, virtual environment 500 is displayed (e.g., by the computer system) as overlaid on top of a physical environment (e.g., a physical environment that includes the computer system) or a representation of a physical environment that is captured by one or more cameras in communication with the computer system.

As illustrated in FIG. 5A, virtual environment 500 includes shop virtual user interface 512 and build virtual user interface 502. Shop virtual user interface 512 corresponds to and/or is provided by a first application that is being executed by the computer system (e.g., the first application is active). Build virtual user interface 502 corresponds to and/or is provided by a second application (e.g., different from the first application) that is also being executed by the computer system (e.g., the second application is active). As illustrated in FIG. 5A, shop virtual user interface 512 is a single continuous user interface. To the contrary, build virtual user interface 502 includes three discrete (e.g., separate and/or distinct) user interfaces. Title virtual user interface 502a, design virtual user interface 502b, and shapes virtual user interface 502c are a part of build virtual user interface 502 but there is space between each user interface within virtual environment 500. The computer system does not display a virtual object between title virtual user interface 502a, design virtual user interface 502b, and shapes virtual user interface 502c.

The first application (e.g., the application that corresponds to shop virtual user interface 512) and/or shop virtual user interface 512 is configured to not allow display of a virtual cursor object with respect to shop virtual user interface 512. The second application (e.g., the application that corresponds to build virtual user interface 502), build virtual user interface 502, title virtual user interface 502a, design virtual user interface 502b, and/or shapes virtual user interface 502c is configured to allow display of a virtual cursor with respect to build virtual user interface 502, title virtual user interface 502a, design virtual user interface 502b, and/or shapes virtual user interface 502c. In some embodiments, the decision on whether to allow the display of the virtual cursor within the first application and/or the second application is one that is made by developers of the first application and the second application. In other embodiments, the decision of whether to allow the display of the virtual cursor within the first application and/or the second application is one that is made by a user. In some embodiments, after the first application and the second application have been developed, the decision on whether to allow the display of the virtual cursor within the first application and/or the second application is reversed (e.g., by a developer and/or by a user).

FIG. 5A illustrates user 508 and gaze 506. User 508 is representative of a user who is currently engaged with the computer system (e.g., the user is wearing the computer system and/or the user is holding the computer system). Gaze 506 is representative of a direction of the gaze of the user. As illustrated at FIG. 5A, gaze 506 is directed at a location that is in between shapes virtual user interface 502c and design virtual user interface 502b. Accordingly, at FIG. 5A, the gaze of the user is directed between the display of shapes virtual user interface 502c and design virtual user interface 502b.

As discussed in greater detail below, the computer system displays a virtual cursor over a user interface when the gaze of the user is detected as being directed at the user interface and when the user interface and/or the application that corresponds to the user interface is configured (e.g., by a developer of the application or by a user) to allow for the display of the virtual cursor. However, the computer system does not display the virtual cursor when the gaze of the user is detected at a location where the computer system does not display content (e.g., the space between design virtual user interface 502b and shapes virtual user interface 502c).

At FIG. 5A, a determination is made that the gaze of the user is not directed at a user interface that the computer system is displaying. Based on the determination that the gaze of user is not directed at a user interface that the computer system is displaying, the computer system does not display a virtual cursor. After FIG. 5A, the gaze of the user moves to the right toward shapes virtual user interface 502c.

As illustrated in FIG. 5B, gaze 506 is directed at shapes virtual user interface 502c. Accordingly, at FIG. 5B, the gaze of the user is directed at the display of shapes virtual user interface 502c. At FIG. 5B, a determination is made that the gaze of the user is directed at shapes virtual user interface 502c. As illustrated in FIG. 5B, because a determination is made that the gaze of the user is directed at shapes virtual user interface 502c and because shapes virtual user interface 502c and/or the second application is configured to allow the display of a virtual cursor within shapes virtual user interface 502c, the computer system displays virtual cursor 518 as overlaid on top of shapes virtual user interface 502c. More specifically, the computer system displays virtual cursor 518 at a location within shapes virtual user interface 502c that corresponds to the gaze of the user. In some embodiments, virtual cursor 518 (e.g., the behavior of virtual cursor 518 and/or the appearance of virtual cursor 518) is managed by an operating system (e.g., a system process of the operating system, such as a cursor process as described above) of the computer system while shapes virtual user interface 502c (and/or content included in shapes virtual user interface 502c) and/or design virtual user interface 502b (and/or content included in design virtual user interface 502b) is managed by the second application. In some embodiments, the cursor process is a system process while the first application and the second application are each being executed within a user process. In some embodiments, the computer system performs a selection operation in response to detecting an input (e.g., tap input, voice command, swipe input, and/or air gesture) that corresponds to a selection of a virtual user interface object while virtual cursor 518 is displayed within shapes virtual user interface 502c. After FIG. 5B, the gaze of the user moves upwards.

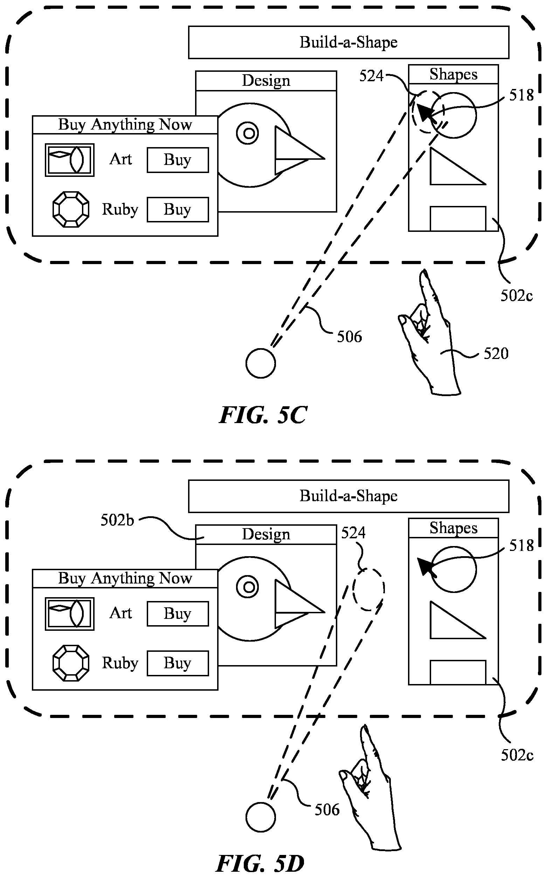

FIG. 5C illustrates hand 520 and hand direction indicator 524. Hand 520 is representative of the right hand of the user and hand direction indicator 524 is a visual aid that represents the direction in which the right hand of the user is directed towards. In some embodiments, hand direction indicator 524 is not displayed by the computer system. As explained in greater detail below, the computer system moves the display of virtual cursor 518 based on the positioning of the right hand of the user.

At FIG. 5C, hand direction indicator 524 is above the previous location of virtual cursor 518 (e.g., the location of virtual cursor at FIG. 5B). Accordingly, at FIG. 5C, the user is directing their hand (e.g., a finger of the hand of the user or multiple fingers of the hand of the user) at a location within shapes virtual user interface 502c that is above the previous location of virtual cursor 518 at FIG. 5B. At FIG. 5C, a determination is made that the user is pointing above the previous location of virtual cursor 518. At FIG. 5C, because a determination is made that the user is directing the hand above the previous location of virtual cursor 518, the computer system moves virtual cursor 518 to the location at which the user is directing their hand.

In some embodiments, the computer system tracks a particular hand of the user (e.g., the right hand of the user or the left hand of the user) based on the computer system identifying the particular hand as a targeted hand. In some embodiments, the computer system identifies the particular hand of the user as the targeted hand based on the computer system detecting the particular hand in a specific orientation (e.g., a fist, an open palm, and/or two fingers directed outwards). In some embodiments, the computer system identifies the particular hand of the user as the targeted hand based on the computer system detecting that the particular hand performs a gesture (e.g., a hand raise, lowering the hand, rotating the hand, a pinch gesture, and/or a de-pinch gesture). In some embodiments, while the right hand of the user is targeted/tracked by the computer system, the computer system detects that the left hand of the user performs the gesture and/or is positioned in the specific orientation. In some embodiments, in response to detecting that the left hand of the user has performed the gesture or is positioned in the specific orientation, the computer system targets and/or tracks the left hand of the user and stops targeting and/or tracking the right hand of the user.

In some embodiments, the computer system moves virtual cursor 518 based on the movement of a different portion of the body of the user (e.g., the head of the user, a foot of the user, an arm of the user, and/or a torso of the user). In some embodiments, the computer moves virtual cursor 518 based on the movement of the hand of the user and a different portion of the body of the user (e.g., e.g., the head of the user, a foot of the user, an arm of the user, and/or a torso of the user).

As illustrated in FIG. 5C, gaze 506 is directed at the same location of shapes virtual user interface 502c as the direction in which the user is directing their hand (e.g., above the previous location of virtual cursor 518 (e.g., the location of virtual cursor at FIG. 5B)). At FIG. 5C, a determination is made that both the gaze of the user and the hand of the user are directed in a common direction (e.g., above the previous location of virtual cursor 518). Because a determination is made that both the gaze of the user and the hand of the user are directed in a common direction, the computer system moves virtual cursor 518 at a faster rate than if the gaze of the user and the direction of the hand of the user were not directed in a common direction. For example, if the gaze of the user was directed downwards and the hand of the user was directed upwards, the computer system would move virtual cursor 518 upwards at a speed that is slower than when the gaze of the user and the hand of the user are both directed upwards. After FIG. 5C, the gaze of the user and the hand of the user move to the left.

As illustrated in FIG. 5D, gaze 506 and hand direction indicator 524 are positioned between design virtual user interface 502b and shapes virtual user interface 502c. More specifically, at FIG. 5D, both gaze 506 and hand direction indicator 524 are directed at a location where the computer system does not display content (e.g., of the second application).

As illustrated in FIG. 5D, the computer system continues to display virtual cursor within (e.g., overlaid on) shapes virtual user interface 502c (e.g., the same location of virtual cursor at FIG. 5C). As explained above, while virtual cursor 418 is displayed, the computer system moves the display of virtual cursor 518 based on the positioning of the hand of the user. However, the computer system does not move virtual cursor 518 to a location where the computer system does not display content. Accordingly, at FIG. 5D, because the computer system does not display content between design virtual user interface 502b and shapes virtual user interface 502c, the computer system does not move the display of virtual cursor 518 between design virtual user interface 502b and shapes virtual user interface 502c. In some embodiments, the computer system ceases to display virtual cursor 518 when a determination is made that the hand of the user is positioned at a location where the computer system does not display content. In some embodiments, the computer system moves virtual cursor 518 to an edge of a user interface (e.g., an edge that is closest to the direction of the hand of the user) that virtual cursor 518 is displayed within based on a determination that the hand of the user is positioned at a location where the computer system does not display content. In some embodiments, the computer system displays virtual cursor 518 at a location where the computer system does not display content based on a determination that the hand of the user is directed at the location where the computer system does not display content. After FIG. 5D, the hand of the user moves to the left while the gaze of the user remains in the same position.

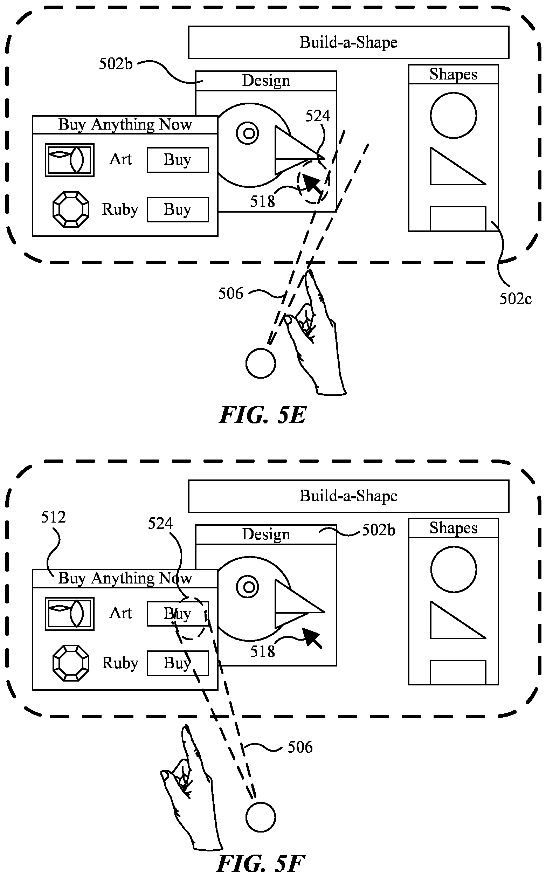

As illustrated in FIG. 5E, representation of gaze 506 is positioned between design virtual user interface 502b and shapes virtual user interface 502c and hand direction indicator 524 is positioned over design virtual user interface 502b. Accordingly, at FIG. 5E, the right hand of the user is directed towards design virtual user interface 502b and the gaze of the user is directed between design virtual user interface 502b and shapes virtual user interface 502c. At FIG. 5E, a determination is made that the hand of the user is directed at design virtual user interface 502b. Because a determination is made that the hand of the user is directed at design virtual user interface 502b, the computer system moves virtual cursor 518 to be positioned within (e.g., overlaid on) design virtual user interface 502b. That is, the computer system moves virtual cursor 518 based a determination that the hand of the user is directed at a user interface that is displayed by the computer system and that corresponds to an application that allows for the display of virtual cursor 518. In some embodiments, the computer system ceases to display virtual cursor 518 within shapes virtual user interface 502c as a part of moving virtual cursor 518. After FIG. 5E, the gaze of the user and the hand of the user move to the left.

As illustrated in FIG. 5F, gaze 506 and hand direction indicator 524 are directed at shop virtual user interface 512. Accordingly, at FIG. 5F, the gaze of the user and the hand of the user are directed at shop virtual user interface 512. As illustrated in FIG. 5F, the computer system continues to display virtual cursor 518 as over (e.g., within) design virtual user interface 502b. As explained above, shop virtual user interface 512 is configured to not allow the display of virtual cursor 518. Accordingly, at FIG. 5F, the computer system does not display virtual cursor 518 within shop virtual user interface 512 though the hand of the user is directed at shop virtual user interface 512. In some embodiments, based on a determination that the hand of the user is directed at shop virtual user interface 512, the computer system ceases to display virtual cursor 518 (e.g., within design virtual user interface 502b). In some embodiments, based on a determination that the hand of the user is directed at shop virtual user interface 512, the computer system moves virtual cursor 518 to a boundary of build virtual user interface 502 that is closest to shop virtual user interface 512.

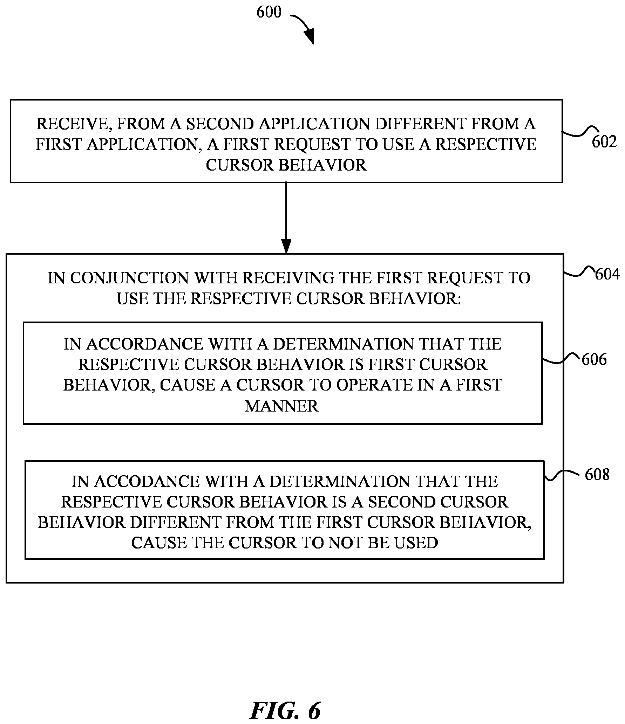

FIG. 6 is a flow diagram illustrating a method (e.g., method 600) for managing the behavior of a cursor in accordance with some embodiments. Some operations in method 600 are, optionally, combined, the orders of some operations are, optionally, changed, and some operations are, optionally, omitted.

As described below, method 600 provides an intuitive way for managing the behavior of a cursor. Method 600 reduces the cognitive burden on a user, thereby creating a more efficient human-machine interface. For battery-operated computing devices, enabling a user to interact with such devices faster and more efficiently conserves power and increases the time between battery charges.

In some embodiments, method 600 is performed at a first application (and/or an application platform) (e.g., a first type of application, a system application, a system process, a first process, a cursor process, a cursor behavior process, and/or system software) executing on a computer system (e.g., a device, a communal device, a personal device, a user device, and/or a head-mounted display (HMD)).

The first application receives (602), from a second application (e.g., a second type of application different from the first type of application, a user application, a user process, a second process different from the first process, and/or application software) (e.g., via an Application Programming Interface (API)) different from the first application, a first request (e.g., as part of a user interface view corresponding to the second application) to use (e.g., evoke, elicit, and/or facilitate) a respective cursor (and/or pointer) behavior (e.g., tuning, cursor tuning, setting, characteristic, attribute, and/or property) (e.g., with respect to (e.g., on and/or within) a first virtual object (e.g., a user interface, a user interface element, a visible virtual object, a virtual surface, a two-dimensional object, a three-dimensional object, a planar surface, a surface that is generated by a virtual device (e.g., a head-mounted device (HMD), an augmented reality device, and/or a virtual reality device), a surface that is displayed as overlaid on top of a representation of a physical environment and/or on a partially transparent surface, and/or a non-tangible surface)).

In conjunction with (604) (e.g., in response to and/or after) receiving the first request to use the respective cursor behavior (e.g., with respect to the first virtual object (e.g., while providing (e.g., displaying and/or managing) the first virtual object)) and in accordance with a determination that the respective cursor behavior is first cursor behavior (e.g., enabled, selected, active, authorized, and/or a particular set of one or more cursor behaviors), the first application causes (606) a cursor (e.g., a pointer, a graphical representation of a hand, and/or a space cursor) to operate in a first manner (e.g., move, select, and/or have a particular visual appearance) (e.g., with respect to (and/or while user input is directed to) the first virtual object (and/or content included within the first virtual object)). In some embodiments, the first application and/or the computer system displays, via a display generation component of the computer system, the cursor. In some embodiments, the cursor operating in the first manner includes moving at a particular speed and/or a particular direction. In some embodiments, the cursor operating in the first manner includes moving and/or selecting having a particular area and/or sensitivity.

In conjunction with (604) receiving the first request to use the respective cursor behavior and in accordance with a determination that the respective cursor behavior is second cursor behavior (e.g., disabled) different from the first cursor behavior, the first application causes (608) the cursor to not be used (e.g., with respect to the first virtual object). In some embodiments, a behavior of the cursor is dependent on which content is included within the first virtual object. In some embodiments, a behavior of the cursor is user specific. In some embodiments, a behavior of the cursor is application specific.

In some embodiments, the computer system is in communication (e.g., wired communication and/or wireless communication) with (and/or includes) a display generation component (e.g., a display screen, a projector, and/or a touch-sensitive display) and one or more input devices (e.g., a camera, a depth sensor, a microphone, a hardware input mechanism, a rotatable input mechanism, a heart monitor, a temperature sensor, and/or a touch-sensitive surface). In some embodiments, after receiving the first request to use the respective cursor behavior (e.g., with respect to the first virtual object), the first application detects (e.g., receives an indication of), via the one or more input devices, a set of one or more user inputs (e.g., gaze, a tap input, a swipe input, voice command, rotation of a rotatable input mechanism, and/or air gesture). In some embodiments, the first application detects the set of one or more user inputs itself. In some embodiments, the first application does not detect the set of one or more user inputs itself but rather receives an indication of the set of one or more user inputs from another application and/or process that is configured to detect user inputs via the one or more input devices. In some embodiments, in response to detecting the set of one or more user inputs and in accordance with a determination that the set of one or more user inputs (and/or at least one input of the set of one or more user inputs, such as one or more final inputs of the set of one or more inputs) corresponds (and/or directed) to a first virtual object (e.g., a user interface, a user interface element, a visible virtual object, a virtual surface, a two-dimensional object, a three-dimensional object, a planar surface, a surface that is generated by a virtual device (e.g., a head-mounted device (HMD), an augmented reality device, and/or a virtual reality device), a surface that is displayed as overlaid on top of a representation of a physical environment and/or on a partially transparent surface, and/or a non-tangible surface) (e.g., the first request is with respect to the first virtual object) (e.g., the set of one or more inputs includes an input that is directed to the first virtual object, such as looking toward the first virtual object, targeting the first virtual object, and/or interacting with the first virtual object, the set of one or more inputs corresponds to selection of the first virtual object, the set of one or more inputs corresponds to selection of content included in the first virtual object, and/or the set of one or more inputs corresponds to a request to change an appearance of the first virtual object and/or content included in the first virtual object) and that the respective cursor behavior is the first cursor behavior, the first application continues to cause the cursor to operate in the first manner (e.g., with respect to the first virtual object) (and/or displays, via the display generation component, the cursor (e.g., within, associated with, and/or at a location corresponding to the first virtual object)). In some embodiments, the cursor is not displayed before detecting the set of one or more inputs. In some embodiments, the cursor is not displayed before detecting an input of the set of one or more inputs that corresponds to the first virtual object. In some embodiments, in response to detecting the set of one or more user inputs and in accordance with a determination that the set of one or more user inputs corresponds to the first virtual object and that the respective cursor behavior is the second cursor behavior, the first application forgoes displaying, via the display generation component, the cursor (and/or forgoes using the cursor with respect to the first virtual object). In some embodiments, in response to detecting the set of one or more inputs and in accordance with a determination that the set of one or more inputs corresponds to the first virtual object, the first application and/or the computer system displays, via the display generation component, the cursor.

In some embodiments, detecting the set of one or more inputs includes detecting (e.g., identifies and/or recognizes), via the one or more input devices, a movement (e.g., lateral movement and/or rotational movement) of a set of one or more body parts (e.g., a hand, a limb, a head, a foot, a finger, and/or a toe) (e.g., the set of one or more body parts is raised, lowered, rotated, and/or directed toward a location, such as a location corresponding to the first virtual object) of a user (e.g., toward, within, and/or at a location corresponding to the first virtual object). In some embodiments, different body parts included in the set of one or more body parts move in different manners. In some embodiments, different body parts included in the set of one or more body parts move in the same manner. In some embodiments, continuing to cause the cursor to operate in the first manner with respect to the first virtual object is based on one or more characteristics (e.g., a direction after the movement, a speed, an acceleration, and/or a length of time directed to a location) of the movement of the set of one or more body parts. In some embodiments, detecting the set of one or more inputs includes detecting (e.g., identifies and/or recognizes), via the one or more input devices, a movement (e.g., lateral movement and/or rotational movement) of an electronic device and/or other physical object that is not a part of a user.

In some embodiments, detecting the movement of the set of one or more body parts of the user includes: in accordance with a determination that a first body part (e.g., an eye, a hand, a limb, a head, a foot, a finger, and/or a toe) of the user was detected (e.g., by the input device and/or by an external computer system) as performing a gesture (e.g., a pinch gesture, a de-pinch gesture, a leg raise, a toe raise, a hand swipe, a hand raise, and/or an air tap) and that a second body part (e.g., an eye, a hand, a limb, a head, a foot, a finger, and/or a toe), different from the first body part, of the user (e.g., different from the first body part of the user) was not detected (e.g., by the input device and/or by an external computer system) as performing the gesture before (e.g., immediately before or within a predetermined threshold amount of time before (e.g., 1- 300 seconds) detecting the movement of the set of one more body parts of the user, detecting, via the one or more input devices, a movement of the first body part (e.g., without detecting and/or monitoring and/or while ignoring a movement of the second body part)) (and/or defining the first body part as a primary body part for movement of the cursor instead of the second body part) (e.g., depending on which body part performs the gesture determines which body part is used for detecting movement such as movement of another body part is not used to determine movement of the cursor) and in accordance with a determination that the second body part was detected (e.g., by the input device and/or by an external computer system) as performing the gesture and that the first body part was not detected as performing the gesture before (e.g., immediately before or within a predetermined threshold amount of time before) detecting the movement of the set of one or more body parts of the user, detecting, via the one or more input devices, a movement of the second body part (e.g., without detecting and/or monitoring and/or while ignoring a movement of the first body part) (and/or defining the second body part as a primary body part for movement of the cursor instead of the first body part). In some embodiments, the movement of the set of one or more body parts and the gesture are the same or different. In some embodiments, the set of one or more body parts includes more body parts than the first body part of the user and/or the second body part of the user.

In some embodiments, after (e.g., immediately after or within a threshold amount of time after (e.g., 1-300 seconds)) detecting the movement of the first body part of the user (e.g., after detecting the movement of the set of one or more body parts of the user) (e.g., after detecting that the first body part performed the gesture) (and/or while the first body part is defined as a primary body part for movement of the cursor), the first application detects, via the one or more input devices, the second body part of the user perform the gesture. In some embodiments, the one or more input devices detects that the second body part performs another gesture different from the gesture. In some embodiments, after (e.g., immediately after or within a threshold amount of time after (e.g., 1-300 seconds) detecting the second body part of the user perform the gesture (and/or without detecting, via the one or more input devices, the first body part of the user perform the gesture),the first application detects a movement (e.g., lateral movement and/or rotational movement) (e.g., the second body part moves to the left, to the right, upwards, downwards, in a clockwise manner and/or in a counter-clockwise manner) of the second body part of the user (e.g., and a third body part of the user and/or the set of one or more body parts) (e.g., without detecting and/or monitoring and/or while ignoring a movement of the first body part of the user)). In some embodiments, in response to detecting the movement of the second body part of the user (and/or without detecting and/or monitoring and/or while ignoring movement of the first body part of the user), the first application continues to cause the cursor to operate in the first manner (e.g., with respect to the first virtual object) (and/or continues and/or maintains displaying, via the display generation component, the cursor) (e.g., based on the movement of the second body part of the user without being based on the movement of the first body part of the user). In some embodiments, the first application and/or the computer system does not perform an operation with respect to the cursor after detecting the second body part of the user perform the gesture and in response to detecting a movement of the first body part of the user (e.g., the movement of the first body part of the user is ignored after detecting the second body part of the user perform the gesture without detecting the first body part of the user perform the gesture).

In some embodiments, detecting the movement of the set of one or more body parts of the user includes: in accordance with a determination that a first body part (e.g., an eye, a hand, a limb, a head, a foot, a finger, and/or a toe) of the user was detected in a first orientation (e.g., the first body part is in front of the user, the first body part is behind the user, the first body part is directed upwards, the first body part is directed downwards, the first body part is directed to the side, the first body part is detected with a number of digits pointing outwards and/or the first body part is detected as creating a shape (e.g., a square and/or a triangle)) and that a second body part (e.g., an eye, a hand, a limb, a head, a foot, a finger, and/or a toe), different from the first body part, of the user was not detected in the first orientation before (e.g., immediately before or within a predetermined threshold amount of time before (e.g., 1- 300 seconds)) detecting the movement of the set of one more body parts of the user, detecting, via the one or more input devices, a movement of the first body part (e.g., without detecting and/or monitoring and/or while ignoring a movement of the second body part) and in accordance with a determination that the second body part was detected in the first orientation and that the first body part was not detected in the first orientation before (e.g., immediately before or within a predetermined threshold amount of time before) detecting the movement of the set of one or more body parts of the user, detecting, via the one or more input devices, a movement of the second body part (e.g., without detecting and/or monitoring and/or while ignoring a movement of the first body part). In some embodiments, the first orientation is user specific and/or application specific. In some embodiments, in accordance with a determination that both the first body part and the second body part were detected in the first orientation before detecting movement of the set of one or more body parts, detecting movement of the set of one or more body parts includes detecting movement of the first body part and the second body part. In some embodiments, in accordance with a determination that both the first body part and the second body part were detected in the first orientation before detecting movement of the set of one or more body parts, detecting movement of the set of one or more body parts includes detecting a movement of whichever body part was first detected in the first orientation before detecting movement of the set of one or more body parts. In some embodiments, in accordance with a determination that both the first body part and the second body part were detected in the first orientation before detecting movement of the set of one or more body parts, detecting movement of the set of one or more body parts includes detecting a movement of whichever body part was last detected in the first orientation before detecting movement of the set of one or more body parts. In some embodiments, in accordance with a determination that both the first body part and the second body part were detected in the first orientation before detecting movement of the set of one or more body parts, detecting movement of the set of one or more body parts includes detecting a movement of whichever body part was detected in the first orientation for a longer period of time before detecting movement of the set of one or more body parts.

In some embodiments, detecting the set of one or more inputs includes detecting, via the one or more inputs devices (e.g., one or more cameras), a gaze of a user. In some embodiments, the gaze of the user is detected for a predetermined period of time (e.g., 1-30 seconds). In some embodiments, the gaze of the user is detected as being static. In some embodiments, the gaze of the user is detected as moving. In some embodiments, the gaze is of a single eye of the user. In some embodiments, the gaze is of both eyes of the user.

In some embodiments, continuing to cause the cursor to operate in the first manner (e.g., with respect to the first virtual object) includes displaying, via the display generation component, the cursor. In some embodiments, while displaying the cursor, the first application detects, via the one or more input devices, a set of one or more inputs (e.g., a hand movement, a gaze of the user, a voice command, and/or a foot movement) corresponding to a request to move the cursor. In some embodiments, in response to detecting the set of one or more inputs corresponding to the request to move the cursor and in accordance with a determination that the set of one or more inputs includes a movement of a body part (e.g., a hand, a limb, a head, a foot, a finger, and/or a toe) of a user in a first direction (e.g., a lateral direction (e.g., to the right, to the left, up and/or down) and/or rotation direction (e.g., clockwise and/or counterclockwise)) without detecting a gaze of the user in the first direction, the first application moves the cursor in the first direction at a first speed. In some embodiments, in response to detecting the set of one or more inputs corresponding to the request to move the cursor and in accordance with a determination that the set of one or more inputs includes a gaze of the user in the first direction (e.g., the gaze of the user moves in the first direction and/or the gaze of the user is directed at an endpoint of the first direction) (e.g., the gaze of the user is detected for greater than a predetermined period of time (e.g., 1-10 seconds)) and movement of the body part in the first direction, the first application moves the cursor in the first direction at a second speed that is greater than the first speed. In some embodiments, the gaze of the user and the movement of the body part of the user are detected at the same time. In some embodiments, the gaze of the user and the movement of the body of the user are detected at different times. In some embodiments, the gaze of the user and the movement of the body of the user are detected for different durations.

In some embodiments, continuing to cause the cursor to operate in the first manner (e.g., with respect to the first virtual object) includes displaying, via the display generation component, the cursor. In some embodiments, while displaying the cursor, the first application detects, via the one or more input devices, a set of one or more inputs (e.g., a hand movement, a gaze of the user, a foot movement, a head movement, and/or a voice command) corresponding to a request to move the cursor. In some embodiments, in response to detecting the set of one or more inputs corresponding to the request to move the cursor and in accordance with a determination that the set of one or more inputs includes a gaze of a user in a first direction (e.g., to the left, to the right, upwards and/or downwards) (e.g., directed in the first direction) (e.g., the gaze of the user is detected for greater than a predetermined period of time (e.g., 1-10 seconds) and movement of a body part (e.g., a hand, a limb, a head, a foot, a finger, and/or a toe) of the user in the first direction (e.g., a lateral direction (e.g., to the right, to the left, up and/or down) and/or rotational direction (e.g., clockwise and/or counterclockwise))), the first application moves the cursor in the first direction at a first speed. In some embodiments, in response to detecting the set of one or more inputs corresponding to the request to move the cursor and in accordance with a determination that the set of one or more inputs includes a movement of the body part of the user in the first direction and a gaze of the user in a second direction different from (e.g., opposite in some embodiments) the first direction (e.g., the first direction is to the left and the second direction is to the right or the first direction is upwards and the second direction is downwards), the first application moves the cursor in the first direction at a second speed that is less than the first speed. In some embodiments, the cursor is moved at different speeds based on the magnitude of the movement of the body part.

In some embodiments, detecting the set of one or more user inputs includes detecting, via the one or more input devices, a gaze of a user (e.g., the gaze of the user is detected for an amount of time that is greater than a time threshold (e.g., 1-15 seconds) directed at a first location of the first virtual object (e.g., an edge of the first virtual object, the center of the first virtual object, the top of the first virtual object and/or the bottom of the first virtual object)). In some embodiments, in response to detecting the set of one or more user inputs, the first application displays, via the display generation component, the cursor at the first location of the first virtual object. In some embodiments, the cursor is overlaid on top of the first virtual object. In some embodiments, the cursor remains displayed at the first location of the first virtual object until a subsequent input is detected. In some embodiments, when the gaze of the user is not detected at a location of the first virtual object, the cursor is displayed at a location that does not correspond to the first virtual object.

In some embodiments, while displaying the cursor at the first location of the first virtual object, the first application detects, via the input device, the gaze (e.g., the gaze of the user is detected for an amount of time that is greater than a time threshold (e.g., 1-15 seconds)) of the user directed at a second location of the first virtual object different from the first location of the first virtual object. In some embodiments, in response to detecting the gaze of the user directed at the second location of the first virtual object, the first application continues to display, via the display component, the cursor at the first location of the first virtual object. In some embodiments, in response to detecting the gaze of the user at the second location of the first virtual object, the first application and/or the computer system moves, via the display component, the cursor from the first location of the first virtual object to the second location of the first virtual object.

In some embodiments, in conjunction with receiving the first request to use the respective behavior (e.g., with respect to the first virtual object) and in accordance with a determination that the respective cursor behavior is a third cursor behavior (e.g., enabled, selected, active, authorized, and/or a particular set of one or more cursor behaviors) different from the first cursor behavior and the second cursor behavior, the first application causes the cursor to operate in a second manner different from the first manner (e.g., move, select, and/or have a particular visual appearance) (e.g., with respect to (and/or while user input is directed to) the first virtual object (and/or content included within the first virtual object)). In some embodiments, the cursor is used (e.g., by the user and/or by the computer system) while the cursor operates in the second manner.

In some embodiments, the respective cursor behavior is a first respective cursor behavior. In some embodiments, in conjunction with (e.g., before, while, and/or after) receiving the first request to use the respective cursor behavior (e.g., with respect to the first virtual object), the first application receives (e.g., from the second application or another application different from the first application and the second application) a second request (e.g., as part of a user interface view corresponding to the second application or another application different from the first application and the second application) to use (e.g., evoke, elicit, and/or facilitate) a second respective cursor (and/or pointer) behavior (e.g., tuning, cursor tuning, setting, characteristic, attribute, and/or property) different from the first respective cursor behavior (e.g., with respect to (e.g., on and/or within) a second virtual object (e.g., a user interface, a user interface element, a visible virtual object, a virtual surface, a two-dimensional object, a three-dimensional object, a planar surface, a surface that is generated by a virtual device (e.g., a head-mounted device (HMD), an augmented reality device, and/or a virtual reality device), a surface that is displayed as overlaid on top of a representation of a physical environment and/or on a partially transparent surface, and/or a non-tangible surface) different from the first virtual object). In some embodiments, in conjunction with (e.g., in response to and/or after) receiving the second request to use the second respective cursor behavior (e.g., with respect to the second virtual object (e.g., while providing (e.g., displaying and/or managing) the second virtual object)) and in accordance with a determination that the first respective behavior is the second cursor behavior (and/or that the second respective behavior is the first cursor behavior), the first application causes the cursor to operate in the first manner with respect to a second virtual object (e.g., the second request corresponds to the second virtual object) while causing the cursor to not be used with respect to the first virtual object. In some embodiments, in conjunction with receiving the second request to use the second respective cursor behavior and in accordance with a determination that the first respective behavior is the first cursor behavior (and/or that the second respective behavior is the second cursor behavior), the first application causes the cursor to not be used with respect to the second virtual object while causing the cursor to operate in the first manner with respect to the first virtual object.

In some embodiments, the computer system is in communication (e.g., wireless communication and/or wired communication) with (and/or includes) a display generation component (e.g., a display screen, a projector, and/or a touch-sensitive display) and one or more input devices (e.g., a camera, a depth sensor, a microphone, a hardware input mechanism, a rotatable input mechanism, a heart monitor, a temperature sensor, and/or a touch-sensitive surface). In some embodiments, after receiving the first request to use the respective cursor behavior (e.g., with respect to the first virtual object) (and/or after receiving the second request to use the second respective cursor behavior (e.g., with respect to the second virtual object)), the first application detects, via the one or more input devices, a first set of one or more user inputs (e.g., gaze, a tap input, a swipe input, voice command, rotation of a rotatable input mechanism, and/or air gesture). In some embodiments, in response to detecting the first set of one or more user inputs and in accordance with a determination that the first set of one or more user inputs (and/or at least one input of the first set of one or more user inputs, such as one or more final inputs of the first set of one or more inputs) corresponds (and/or directed) to a second virtual object (e.g., a user interface, a user interface element, a visible virtual object, a virtual surface, a two-dimensional object, a three-dimensional object, a planar surface, a surface that is generated by a virtual device (e.g., a head-mounted device (HMD), an augmented reality device, and/or a virtual reality device), a surface that is displayed as overlaid on top of a representation of a physical environment and/or on a partially transparent surface, and/or a non-tangible surface) (e.g., the first set of one or more inputs includes an input that is directed to the second virtual object, such as looking toward the second virtual object, targeting the second virtual object, and/or interacting with the second virtual object, the first set of one or more inputs corresponds to selection of the second virtual object, the first set of one or more inputs corresponds to selection of content included in the second virtual object, and/or the first set of one or more inputs corresponds to a request to change an appearance of the second virtual object and/or content included in the second virtual object) of a third application (e.g., a user application, a user process, and/or application software) (e.g., via an Application Programming Interface (API)), the first application causes the cursor to operate in a second manner (e.g., move, select, have a particular visual appearance, not be used, and/or not be displayed). In some embodiments, the second manner and the first manner are the same. In some embodiments, the second manner is different from the first manner. In some embodiments, the first manner is specific to the second application and the second manner is specific to the third application. In some embodiments, in response to detecting the first set of one or more user inputs and in accordance with a determination that the first set of one or more inputs corresponds to a third virtual object (e.g., a user interface, a user interface element, a visible virtual object, a virtual surface, a two-dimensional object, a three-dimensional object, a planar surface, a surface that is generated by a virtual device (e.g., a head-mounted device (HMD), an augmented reality device, and/or a virtual reality device), a surface that is displayed as overlaid on top of a representation of a physical environment and/or on a partially transparent surface, and/or a non-tangible surface) (e.g., the first set of one or more inputs includes an input that is directed to the third virtual object, such as looking toward the third virtual object, targeting the third virtual object, and/or interacting with the third virtual object, the first set of one or more inputs corresponds to selection of the third virtual object, the first set of one or more inputs corresponds to selection of content included in the third virtual object, and/or the first set of one or more inputs corresponds to a request to change an appearance of the third virtual object and/or content included in the third virtual object), different from the second virtual object, of a fourth application different from the third application, the first application causes the cursor to operate in a third manner (e.g., move, select, have a particular visual appearance, not be used, and/or not be displayed) different from the second manner (e.g., and/or separate from the first manner or the same as the first manner). In some embodiments, the second virtual object and the third virtual object are the same types of virtual objects or different types of virtual objects. In some embodiments, the third manner and the first manner are the same. In some embodiments, the third manner and the first manner are different. In some embodiments, the first manner is specific to the second application and the third manner is specific to the fourth application.

In some embodiments, before detecting the first set of one or more user inputs, the first application receives, from the third application, a second request (e.g., as part of a user interface view corresponding to the second application) to use (e.g., evoke, elicit, and/or facilitate) a second respective cursor behavior (e.g., with respect to the second virtual object (e.g., while providing (e.g., displaying and/or managing) the second virtual object)), wherein causing the cursor to operate in the second manner occurs in accordance with a determination that the second respective cursor behavior is third cursor behavior. In some embodiments, before detecting the first set of one or more user inputs, the first application receives, from the fourth application, a third request (e.g., as part of a user interface view corresponding to the second application) to use (e.g., evoke, elicit, and/or facilitate) a third respective cursor behavior (e.g., with respect to the third virtual object (e.g., while providing (e.g., displaying and/or managing) the second virtual object)), wherein causing the cursor to operate in the third manner occurs in accordance with a determination that the third respective cursor behavior is fourth cursor behavior different from the third cursor behavior.

In some embodiments, the computer system is in communication (e.g., wireless communication and/or wired communication) with (and/or includes) one or more input devices (e.g., a camera, a depth sensor, a microphone, a hardware input mechanism, a rotatable input mechanism, a heart monitor, a temperature sensor, and/or a touch-sensitive surface). In some embodiments, while causing the cursor to operate in the first manner (e.g., with respect to the first visual object), the first application receives, from the second application, a second request (e.g., as part of a user interface view corresponding to the second application) to use (e.g., evoke, elicit, and/or facilitate) the cursor in a second manner (e.g., move, select, have a particular visual appearance, not be used, and/or not be displayed) different from the first manner (e.g., with respect to the first virtual object). In some embodiments, in response to receiving the second request to use the cursor in the second manner, the first application causes (e.g., enables) the cursor to operate in the second manner (e.g., with respect to the first virtual object) (e.g., and causes the cursor to not operate in the first manner). In some embodiments, in response to receiving the second request to use the cursor in the second manner, the first application and/or the computer system causes the cursor to operate in the first manner and the second manner (e.g., simultaneously or serially). In some embodiments, while causing the cursor to operate in the second manner with respect to the first visual object, the first application receives, from the second application, a third request (e.g., as part of a user interface view corresponding to the second application) to use (e.g., evoke, elicit, and/or facilitate) the cursor in the first manner with respect to the first virtual object. In some embodiments, in response to receiving the third request to use the cursor in the first manner, the first application causes (e.g., enables) the cursor to operate in the first manner with respect to the first virtual object (e.g., and causes the cursor to not operate in the second manner).

In some embodiments, the computer system is in communication (e.g., wired communication and/or wireless communication) with (and/or includes) a display generation component (e.g., a display screen, a projector, and/or a touch-sensitive display) and one or more input devices (e.g., a camera, a depth sensor, a microphone, a hardware input mechanism, a rotatable input mechanism, a heart monitor, a temperature sensor, and/or a touch-sensitive surface). In some embodiments, after receiving the first request to use the respective cursor behavior (e.g., with respect to the first virtual object), the first application detects, via the one or more input devices, a user input (e.g., gaze, a tap input, a swipe input, voice command, rotation of a rotatable input mechanism, and/or air gesture). In some embodiments, in response to detecting the user input (and/or in accordance with a determination that the user input corresponds and/or is directed to the first virtual object) (and/or in accordance with a determination that the respective cursor behavior is the first cursor behavior), the first application displays, via the display generation component, the cursor (and/or causes (e.g., enables, evokes, and/or elicits) display of the cursor (e.g., in the first manner and/or second manner) with respect to the first virtual object).

In some embodiments, the computer system is in communication (e.g., wireless communication and/or wired communication) with (and/or includes) a display generation component (e.g., a display screen, a projector, and/or a touch-sensitive display) and one or more input devices (e.g., a camera, a depth sensor, a microphone, a hardware input mechanism, a rotatable input mechanism, a heart monitor, a temperature sensor, and/or a touch-sensitive surface). In some embodiments, while displaying, via the display generation component, the cursor (e.g., at a location within and/or corresponding to the first virtual object) (and/or while causing the cursor to operate in the first manner), the first application detects, via the one or more input devices, a request (e.g., an air gesture, voice command, gaze, pinch gesture, de-pinch gesture, and/or air swipe) to move the cursor to a respective location (e.g., a virtual or physical location). In some embodiments, in response to detecting the request to move the cursor to the respective location and in accordance with a determination that the respective location does not correspond to the first virtual object (e.g., the first virtual object is not displayed and/or included at the respective location) (and/or does not correspond to any virtual object) (and/or that the respective location corresponds to an empty space outside of the first virtual object) (and/or that the respective location corresponds to a location outside of the first virtual object), the first application forgoes moving the cursor to the respective location (and/or ceases displaying, via the display generation component, the cursor) (and/or maintains display of the cursor in a location that corresponds to the first virtual object (e.g., a location where the cursor was located while detecting the request and/or an edge of the first virtual object in a direction of the respective location)). In some embodiments, in response to detecting the request to move the cursor to the respective location, and in accordance with a determination that the respective location corresponds to the first virtual object (e.g., and/or content of the first virtual object) (e.g., the first virtual object is displayed and/or projected at the respective location), the first application displays, via the display component, the cursor at the respective location. In some embodiments, in response to detecting the request to move the cursor to the respective location and in accordance with a determination that the respective location does not correspond to a virtual object that has the cursor enabled (e.g., to operate in the first manner or another manner different from the first manner) (e.g., the first application is not causing the cursor to operate in the first manner with respect to a virtual object corresponding to the respective location), the first application and/or the computer system ceases displaying, via the display generation component, the cursor. In some embodiments, in response to detecting the request to move the cursor to the respective location and in accordance with a determination that the respective location corresponds to another virtual object different from the first virtual object (and/or that the other virtual object has the cursor enabled (e.g., to operate in the first manner or another manner different from the first manner) (e.g., the first application is causing the cursor to operate in the first manner with respect to the other virtual object), the first application and/or the computer system displays, via the display generation component, the cursor at the respective location).

In some embodiments, the first application is a system process (e.g., responsible for managing one or more resources (e.g., a processor and/or memory) of the computer system) (e.g., initiated and/or managed by and/or corresponding to an operating system of the computer system). In some embodiments, the second application is a user process (e.g., a process that is initiated and/or created by a user) (e.g., not corresponding to an operating system of the computer system).

In some embodiments, behavior (e.g., cursor, display, and/or interaction behavior) of (and/or with respect to) the cursor (e.g., how the cursor moves and/or how operations corresponding to the cursor are performed) is managed (e.g., governed and/or controlled) by the first application (e.g., the cursor is managed by the first application) (e.g., and not managed by the second application). In some embodiments, behavior (e.g., display and/or interaction behavior) of (and/or with respect to) the first virtual object (e.g., content included in the first virtual object, display of the first virtual object, interactions with the first virtual object spatial orientation of the first virtual object, and/or size of the first virtual object) is managed by the second application (e.g., the first virtual object is managed by the second application) (e.g., and not managed by the first application). In some embodiments, a common application manages both the behavior of the cursor and the behavior of the first virtual object.

In some embodiments, the first request to use the respective cursor behavior (e.g., with respect to the first virtual object) is included in a view (e.g., a declarative view) (e.g., a stateful, mutable object instance) of a user interface (e.g., what to display for the user interface in one or more different states) that corresponds to the second application. In some embodiments, the view of the user interface includes a definition of the first virtual object (e.g., one or characteristics and/or attributes of the first virtual object, such as how the first virtual object is to be displayed and/or how to interact with the first virtual object).

In some embodiments, the respective cursor behavior is a first respective cursor behavior. In some embodiments, the view of the user interface includes a definition of another virtual object (e.g., a user interface, a user interface element, a visible virtual object, a virtual surface, a two-dimensional object, a three-dimensional object, a planar surface, a surface that is generated by a virtual device (e.g., a head-mounted device (HMD), an augmented reality device, and/or a virtual reality device), a surface that is displayed as overlaid on top of a representation of a physical environment and/or on a partially transparent surface, and/or a non-tangible surface) different from the first virtual object. In some embodiments, the view includes a request to use (e.g., evoke, elicit, and/or facilitate) a second respective cursor (and/or pointer) behavior (e.g., tuning, cursor tuning, setting, characteristic, attribute, and/or property) with respect to (e.g., on and/or within) the other virtual object. In some embodiments, the second respective cursor behavior is different from the first respective cursor behavior.

In some embodiments, the request to use the second respective cursor behavior with respect to the other virtual object corresponds to a request to inherit from (and/or rely on) a parent node of the other virtual object within the view (e.g., cursor behavior with respect to the other virtual object is undefined within a node (e.g., of the view) corresponding to the other virtual object and instead inherits from the parent node (e.g., different from the node corresponding to the other virtual object)) (e.g., cursor behavior with respect to the other virtual object is configured to change depending on a state of the parent node). In some embodiments, the first request to use the first respective cursor behavior (e.g., with respect to the first virtual object) does not correspond to a request to inherit from a parent node of the first virtual object within the view (e.g., the first request defines the first respective cursor behavior instead of relying and/or inheriting on another node of the view) (e.g., cursor behavior with respect to the first virtual object is configured to not change depending on a state of a parent node of the first virtual object).

In some embodiments, causing the cursor to operate in the first manner (e.g., with respect to the first virtual object) includes causing the cursor to operate with a first sensitivity (e.g., an amount of movement of the cursor based on a magnitude of an input (e.g., the cursor moves a first distance if an input has a first magnitude or the cursor moves a second distance different from the first distance if the input has the first magnitude)), speed (e.g., speed of movement), area of selection (e.g., buffer zone around the cursor where objects within the buffer zone around the cursor are selected in response to the detection of an input), visual characteristic (e.g., size, color, appearance (e.g., whether the cursor resembles a pointer or a hand) and/or spatial orientation), range of motion (e.g., bounds of where the cursor can be displayed), or any combination thereof.

Note that details of the processes described above with respect to method 600 (e.g., FIG. 6) are also applicable in an analogous manner to other methods described herein. For example, method 600 optionally includes one or more of the characteristics of the various methods described above with reference to method 600. For example, the first application of method 600 can be the second application of method 700. For brevity, these details are not repeated herein.

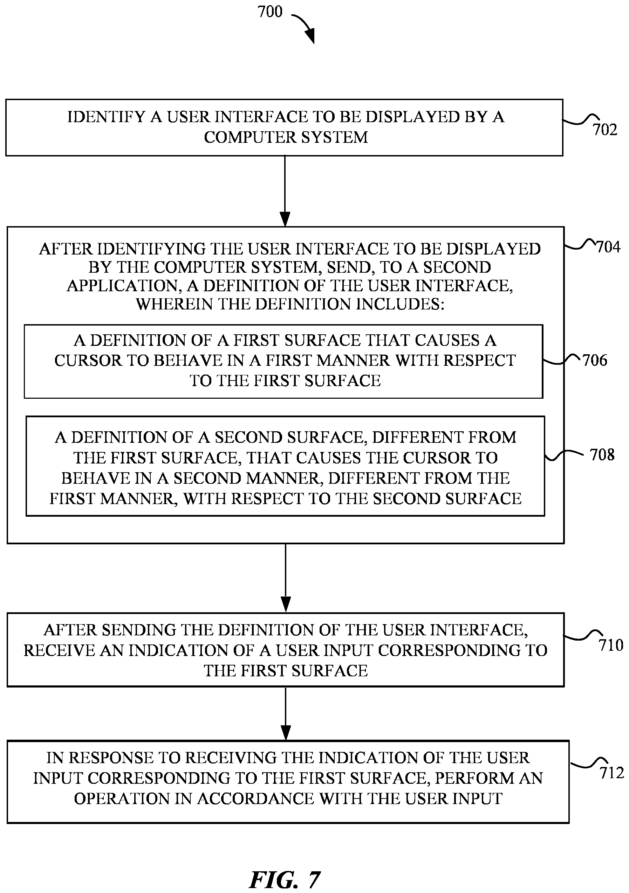

FIG. 7 is a flow diagram illustrating a method (e.g., method 700) for changing the behavior of a cursor in accordance with some embodiments. Some operations in method 700 are, optionally, combined, the orders of some operations are, optionally, changed, and some operations are, optionally, omitted.

As described below, method 700 provides an intuitive way for changing the behavior of a cursor. Method 700 reduces the cognitive burden on a user, thereby creating a more efficient human-machine interface. For battery-operated computing devices, enabling a user to interact with such devices faster and more efficiently conserves power and increases the time between battery charges.

In some embodiments, method 700 is performed at a first application (e.g., the second type of application described above, a user application, a user process, a second process different from the first process, and/or application software) executing on a computer system (e.g., a device, a communal device, a personal device, a user device, and/or a head-mounted display (HMD)).

The first application identifies (702) a user interface (e.g., a graphical user interface) (e.g., corresponding to, associated with, and/or of the first application) to be displayed (e.g., in the future by, such as without a predefined time to be displayed but instead an event that causes the user interface to be displayed) (e.g., in the immediate future, such as an event has already been detected and the user interface is identified in response to the event being detected) by the computer system. In some embodiments, the user interface is identified in response to the first application detecting an event corresponding to a request to display the user interface, such as a user input with respect to another user interface different from the user interface.

After identifying the user interface to be displayed by the computer system, the first application sends (704), to a second application (and/or an application platform) (e.g., the first type of application described above, a system application, a system process, a first process, a cursor process, a cursor behavior process, and/or system software) (e.g., via an Application Programming Interface (API)), a definition (and/or view) of the user interface, wherein the definition includes: (706) a definition (e.g., an API call) of a first surface (and/or a first virtual object, such as a user interface, a user interface element, and/or a visible virtual object) (e.g., a virtual surface, a two-dimensional object, a three-dimensional object, a planar surface, a surface that is generated by a virtual device (e.g., a head-mounted device (HMD), an augmented reality device, and/or a virtual reality device), a surface that is displayed as overlaid on top of a representation of a physical environment and/or on a partially transparent surface, and/or a non-tangible surface) that causes a cursor (and/or pointer) to behave in a first manner (e.g., move, select, and/or have a particular visual appearance) (e.g., with respect to (and/or while user input is directed to) the first virtual object (and/or content included within the first virtual object)) with respect to (and/or for) the first surface and a (708) definition (e.g., an API call) of a second surface, different from the first surface, that causes the cursor to behave in a second manner, different from the first manner, with respect to (and/or for) the second surface. In some embodiments, the cursor behaving in the first manner includes the cursor moving at a particular speed and/or a particular direction. In some embodiments, the cursor behaving in the first manner includes the cursor moving and/or selecting having a particular area and/or sensitivity. In some embodiments, the cursor behaving in the second manner includes the cursor moving at a particular speed and/or a particular direction. In some embodiments, the cursor behaving in the second manner includes the cursor moving and/or selecting having a particular area and/or sensitivity. In some embodiments, the cursor behaving in the second manner includes the cursor being disabled and/or not displayed with respect to the second surface.

After sending the definition of the user interface, the first application receives (710) (e.g., from the second application or a third application (e.g., the first type of application described above, a system application, a system process, a first process, a cursor process, a cursor behavior process, a display process, a user input process, and/or system software) (e.g., via an API) different from the first application and the second application) an indication of a user input (e.g., a movement input, a selection input, a tap input, and/or a non-tap input (e.g., a verbal input, an audible request, an audible command, an audible statement, a swipe input, a hold-and-drag input, a gaze input, an air gesture, and/or a mouse click)) corresponding to the first surface. In some embodiments, the user input corresponds to the cursor, such as movement and/or selection via the cursor.

In response to receiving the indication of the user input corresponding to the first surface, the first application performs (712) an operation in accordance with the user input. In some embodiments, after sending the definition of the user interface, the first application receives (e.g., from the second application or the third application), in indication of a user input corresponding to the second surface. In some embodiments, in response to receiving the indication of the user input corresponding to the second surface, the first application performs another operation, different from the application, in accordance with the user input corresponding to the second surface.

Note that details of the processes described above with respect to method 700 (e.g., FIG. 7) are also applicable in an analogous manner to the methods described herein. For example, method 700 optionally includes one or more of the characteristics of the various methods described herein with reference to method 700. For example, the first request of method 600 can be the definition of the user interface of method 700. For brevity, these details are not repeated herein.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the techniques and their practical applications. Others skilled in the art are thereby enabled to best utilize the techniques and various examples with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve the behavior of a cursor. The present disclosure contemplates that in some instances, this gathered data can include personal information data that uniquely identifies or can be used to contact or locate a specific person. Such personal information data can include location data, body data, body positioning data, application data (e.g., amount spent interacting with a particular application, actions taken with respect to a particular application), computer usage data (e.g., time spent using computer system, different manners in which user interacts with the computer system), or any other identifying information.

The present disclosure recognizes that the use of such personal information data, in the present technology, can be used to the benefit of users. For example, the personal information data can be used to tailor the behavior of a cursor to a user. Accordingly, use of such personal information data enables better cursor interactions. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of image capture, the present technology can be configured to allow users to select to "opt in" or "opt out" of participation in the collection of personal information data during registration for services.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, a user can control the behavior of a cursor without the computer system tracking the movements of the user.

FIG. 8 illustrates electronic system 800 with which one or more implementations of the subject technology may be implemented. Electronic system 800 can be, and/or can be a part of, electronic device 105, handheld electronic device 104, electronic device 110, electronic device 115, and/or server 120 as shown in FIG. 1. Electronic system 800 may include various types of computer readable media and interfaces for various other types of computer readable media. Electronic system 800 includes bus 808, one or more processing unit(s) 812, system memory 804 (and/or buffer), ROM 810, permanent storage device 802, input device interface 814, output device interface 806, and one or more network interfaces 816, or subsets and variations thereof.

Bus 808 collectively represents all system, peripheral, and chipset buses that communicatively connect the numerous internal devices of electronic system 800. In one or more implementations, bus 808 communicatively connects one or more processing unit(s) 812 with ROM 810, system memory 804, and permanent storage device 802. From these various memory units, one or more processing unit(s) 812 retrieves instructions to execute and data to process in order to execute the processes of the subject disclosure. One or more processing unit(s) 812 can be a single processor or a multi-core processor in different implementations.

ROM 810 stores static data and instructions that are needed by one or more processing unit(s) 812 and other modules of electronic system 800. Permanent storage device 802, on the other hand, may be a read-and-write memory device. Permanent storage device 802 may be a non-volatile memory unit that stores instructions and data even when electronic system 800 is off. In one or more implementations, a mass-storage device (such as a magnetic or optical disk and its corresponding disk drive) may be used as permanent storage device 802.

In one or more implementations, a removable storage device (such as a floppy disk, flash drive, and its corresponding disk drive) may be used as permanent storage device 802. Like permanent storage device 802, system memory 804 may be a read-and-write memory device. However, unlike permanent storage device 802, system memory 804 may be a volatile read-and-write memory, such as random access memory. System memory 804 may store any of the instructions and data that one or more processing unit(s) 812 may need at runtime. In one or more implementations, the processes of the subject disclosure are stored in system memory 804, permanent storage device 802, and/or ROM 810 (which are each implemented as a non-transitory computer-readable medium). From these various memory units, one or more processing unit(s) 812 retrieves instructions to execute and data to process in order to execute the processes of one or more implementations.

Bus 808 also connects to input and output device interfaces 814 and 806. Input device interface 814 enables a user to communicate information and select commands to electronic system 800. Input devices that may be used with input device interface 814 may include, for example, alphanumeric keyboards and pointing devices (also called "cursor control devices"). Output device interface 806 may enable, for example, the display of images generated by electronic system 800. Output devices that may be used with output device interface 806 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 8, bus 808 also couples electronic system 800 to one or more networks and/or to one or more network nodes, such as electronic device 110 shown in FIG. 1, through one or more network interface(s) 816. In this manner, electronic system 800 can be a part of a network of computers (such as a LAN, a wide area network ("WAN"), or an Intranet, or a network of networks, such as the Internet. Any or all components of electronic system 800 can be used in conjunction with the subject disclosure.

These functions described above can be implemented in computer software, firmware or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, such as microprocessors, storage and memory that store computer program instructions in a machine-readable or computer-readable medium (also referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra density optical discs, any other optical or magnetic media, and floppy disks. The computer-readable media can store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, such as application specific integrated circuits (ASICs) or field programmable gate arrays (FPGAs). In some implementations, such integrated circuits execute instructions that are stored on the circuit itself.

As used in this specification and any claims of this application, the terms "computer", "server", "processor", and "memory" all refer to electronic or other technological devices. These terms exclude people or groups of people. For the purposes of the specification, the terms display or displaying means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; e.g., feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; e.g., by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and may interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other implementations. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A method, comprising:
at a first application executing on a computer system:
receiving, from a second application different from the first application, a first request to use a respective cursor behavior; and
in conjunction with receiving the first request to use the respective cursor behavior:
in accordance with a determination that the respective cursor behavior is first cursor behavior, causing a cursor to operate in a first manner; and
in accordance with a determination that the respective cursor behavior is second cursor behavior different from the first cursor behavior, causing the cursor to not be used.

2. The method of claim 1, wherein the computer system is in communication with a display generation component and one or more input devices, the method further comprising:
after receiving the first request to use the respective cursor behavior, detecting, via the one or more input devices, a set of one or more user inputs; and
in response to detecting the set of one or more user inputs:
in accordance with a determination that the set of one or more user inputs corresponds to a first virtual object and that the respective cursor behavior is the first cursor behavior, continuing to cause the cursor to operate in the first manner; and
in accordance with a determination that the set of one or more user inputs corresponds to the first virtual object and that the respective cursor behavior is the second cursor behavior, forgoing displaying, via the display generation component, the cursor.

3. The method of claim 2, wherein detecting the set of one or more inputs includes detecting, via the one or more input devices, a movement of a set of one or more body parts of a user.

4. The method of claim 2, wherein detecting the set of one or more inputs includes detecting, via the one or more inputs devices, a gaze of a user.

5. The method of any one of claims 1-4, wherein the first request to use the respective cursor behavior is included in a view of a user interface that corresponds to the second application, and wherein the view of the user interface includes a definition of the first virtual object.

6. The method of claim 5, wherein the respective cursor behavior is a first respective cursor behavior, wherein the view of the user interface includes a definition of another virtual object different from the first virtual object, wherein the view includes a request to use a second respective cursor behavior with respect to the other virtual object, and wherein the second respective cursor behavior is different from the first respective cursor behavior.

7. The method of claim 6, wherein the request to use the second respective cursor behavior with respect to the other virtual object corresponds to a request to inherit from a parent node of the other virtual object within the view, and wherein the first request to use the first respective cursor behavior does not correspond to a request to inherit from a parent node of the first virtual object within the view.

8. A non-transitory computer-readable medium storing one or more programs configured to be executed by one or more processors of a first application executing on a computer system, the one or more programs including instructions for performing the method of any one of claims 1-7.

9. A first application executing on a computer system, comprising:
one or more processors; and
memory storing one or more programs configured to be executed by the one or more processors, the one or more programs including instructions for performing the method of any one of claims 1-7.
